# EUROPÄISCHE PATENTSCHRIFT

(11) **EP 2 603 397 B1**
(45) Veröffentlichungstag und Bekanntmachung des Hinweises auf die Patenterteilung: **02.09.2015**
(21) Anmeldenummer: 11717638.8
(22) Anmeldetag: 03.05.2011
(51) Int. Cl.: B60N 2/48, B60N 2/58

(54) **VERFAHREN ZUR HERSTELLUNG VON KOPFSTÜTZEN FÜR FAHRZEUGSITZE UND EINE SOLCHE KOPFSTÜTZE**
METHOD FOR PRODUCING HEAD RESTRAINTS FOR VEHICLE SEATS AND ONE SUCH HEAD RESTRAINT
PROCÉDÉ DE FABRICATION D'APPUIE-TÊTES POUR SIÈGES DE VÉHICULES ET APPUIE-TÊTE DE CE TYPE

(30) Priorität: 13.08.2010 DE 102010034274
(43) Veröffentlichungstag der Anmeldung: 19.06.2013
(73) Patentinhaber: Johnson Controls GmbH, 51399 Burscheid (DE)
(72) Erfinder: FRITSCH, Christophe, F-67460 Souffelweyersheim (FR); GEISINGER, Eugénie, F-67320 Drulingen (FR); PLOZNER, Michèle, F-67230 Kertzfeld (FR)
(74) Vertreter: Finger, Catrin
(86) Internationale Anmeldenummer: PCT/EP2011/057036
(87) Internationale Veröffentlichungsnummer: WO 2012/019791

(56) Entgegenhaltungen:
- WO-A1-2006/103242
- DE-A1- 3 736 828

## Beschreibung

Die Erfindung betrifft eine Kopfstütze für einen Fahrzeugsitz gemäß dem Oberbegriff des Anspruchs 1. Weiterhin betrifft die Erfindung ein Verfahren zur Herstellung einer Kopfstütze gemäß dem Oberbegriff des Anspruchs 5.

Aus dem Stand der Technik ist die Herstellung von Kopfstützen aus einem aufgeschäumten Kunststoff bekannt, wobei ein die Oberfläche der Kopfstütze bildendes Material, beispielsweise Leder oder Stoff, in eine Form eingebracht und anschließend mit dem flüssigen Kunststoff ausgeschäumt wird. Der Kunststoff härtet anschließend in der Form aus.

Die DE 10 2005 015 292 B3 beschreibt eine Kopfstütze für ein Fahrzeug, ein Verfahren zur Herstellung einer Kopfstütze und einen Fahrzeugsitz mit einer Kopfstütze, wobei die Kopfstütze einen Kopfstützenkörper und eine Kopfstützenhalterung aufweist, wobei ein Füllmaterial zwischen einem Verbindungsteil und einem Bezug vorgesehen ist und wobei bezüglich des Füllmaterials in seinem Verarbeitungszustand das Verbindungsteil und der Bezug einen im Wesentlichen dichten Raumbereich definieren.

Aus der DE 37 36 828 A1 ist eine Kopfstütze mit einem innen umlaufenden Kanal bekannt, in welchem aneinandergrenzende Stoffränder eines Bezugsstoffs mit einer Naht verbunden sind und diese Naht mit einer umlaufenden Zugkordel in den Kanal hineingezogen und dort gehalten ist.

Aufgabe der vorliegenden Erfindung ist es, eine gegenüber dem Stand der Technik verbesserte Kopfstütze für einen Fahrzeugsitz und ein gegenüber dem Stand der Technik verbessertes, insbesondere effizienteres Verfahren zur Herstellung von Kopfstützen für Fahrzeugsitze anzugeben, mit welchem Absätze, Vorsprünge und/oder Kanten in die Oberfläche der Kopfstütze eingebracht werden können.

Hinsichtlich der Kopfstütze für einen Fahrzeugsitz wird die Aufgabe durch die im Anspruch 1 angegebenen Merkmale gelöst. Hinsichtlich des Verfahrens zur Herstellung einer Kopfstütze wird die Aufgabe durch die im Anspruch 5 angegebenen Merkmale gelöst.

Vorteilhafte Weiterbildungen der Erfindung sind Gegenstand der Unteransprüche.

Bei der Kopfstütze für einen Fahrzeugsitz mit einem Kopfstützenkörper und zumindest einem Halteelement, wobei an der Außenseite des Kopfstützenkörpers zumindest abschnittsweise ein Bezug vorgesehen ist, welcher eine Oberfläche der Kopfstütze bildet, wobei der Bezug aus zumindest einem vorderen Abschnitt und einem hinteren Abschnitt gebildet ist, welche ballon- oder sackartig mittels zumindest einer Verbindungsnaht miteinander koppelbar sind, ist erfindungsgemäß ein Profilelement kraft- und/oder formschlüssig unter Ausbildung einer umlaufenden absatz- oder vorsprungartigen Kante an der Oberfläche der Kopfstütze in die zumindest eine Verbindungsnaht eingebracht. Dadurch ist eine Herstellung von Kopfstützen im herkömmlichen Ausschäumverfahren ermöglicht, welche Absätze, Vorsprünge und/oder Kanten in der Oberfläche aufweisen.

Dabei ist innerhalb des Kopfstützenkörpers ein Verbindungsteil zur Verbindung des zumindest einen Halteelements mit dem Kopfstützenkörper vorgesehen, wobei zwischen dem Verbindungsteil und dem Bezug ein Füllmaterial, insbesondere ein Schaum, angeordnet ist, wobei das Füllmaterial in seinem Verarbeitungszustand im Wesentlichen flüssig vorgesehen ist und der Bezug einen bezüglich des Füllmaterials im Verarbeitungszustand dichten Hohlraum in seinem Inneren ausbildet.

Weitere ist das Profilelement erfindungsgemäß zumindest abschnittsweise flexibel ausgebildet. Dadurch ist das Profilelement vorteilhafterweise an eine Kontur der Kopfstütze anpassbar.

Vorteilhafterweise können die Absätze, Vorsprünge und/oder Kanten sowohl in flachen als auch an ver- oder abgerundeten Oberflächenbereichen der Kopfstütze angeordnet werden.

Besonders bevorzugt weist das Profilelement einen rechteckigen Querschnitt auf und ist aus einem Kunststoff oder einem Kunststoffgemisch gefertigt. Dabei ist das Profilelement bevorzugt die Kopfstütze vollständig oder nahezu vollständig umlaufend ausgebildet.

In einem ersten Verfahrensschritt werden der vordere Abschnitt und der hintere Abschnitt des Bezugs mit ihren Außenseiten aufeinander gelegt und mittels einer ersten Naht miteinander vernäht.

In einem zweiten Verfahrensschritt wird das Profilelement mit seiner Unterseite derart auf die erste Naht aufgelegt, dass eine Hinterseite des Profilelements bündig oder nahezu bündig mit einem Endbereich der beiden miteinander vernähten Abschnitte des Bezugs abschließt, wobei das Profilelement mittels einer zweiten Naht mit den miteinander vernähten Abschnitten vernäht wird, wobei diese zweite Naht im Bereich einer Vorderseite des Profilelements verläuft.

In einem dritten Verfahrensschritt wird ein freies Ende des vorderen Abschnitts um die Vorderseite und eine Oberseite des Profilelements geführt und mit einer dritten Naht vernäht, wobei diese dritte Naht durch den Endbereich, das Profilelement und den vorderen Abschnitt des Bezugs verläuft und die dritte Naht im Bereich einer Hinterseite des Profilelements angeordnet ist. Die Nähte sind dabei derart angeordnet, dass ein Verdrehen des Profilelements auch beim anschließenden Ausschäumen des Bezugs mit Kunststoff sicher verhindert wird.

In einem vierten Verfahrensschritt wird der Bezug in eine Form eingebracht und mit einem flüssigen Kunststoff oder einem Kunststoffgemisch ausgeschäumt, wobei in der Form eine mit der Verbindungsnaht und dem Profilelement des Bezugs korrespondierende Nut ausgeformt ist. Durch das im Bezug der Kopfstütze eingenähte Profilelement wird das Einlegen des Bezugs in die Form, in welcher der Bezug ausgeschäumt wird, erleichtert. Die vom eingenähten Profilelement gebildete Kante im Bezug korrespondiert mit einem Absatz oder einer Nut in der Form, wodurch der gesamte Bezug der Kopfstütze im Zeitraum zwischen dem Einlegen und dem Ausschäumen sicher in der Form fixiert ist.

In einem fünften Verfahrensschritt wird vom verfestigten Kunststoff oder dem verfestigten Kunststoffgemisch im Inneren des Bezugs ein Schaum ausbildet, welcher das Innere des Bezugs vollständig oder nahezu vollständig ausfüllt.

Zur Herstellung der erfindungsgemäßen Kopfstütze mit dem Absatz, der Kante oder dem Vorsprung wird in besonders vorteilhafter Weise kein zusätzlicher Arbeitschritt benötigt.

Besonders vorteilhafterweise ermöglicht die vorliegende Erfindung eine große Anzahl von Design- und Gestaltungsvarianten bei der Herstellung von Kopfstützen.

Anhand der beigefügten schematischen Figuren wird die Erfindung näher erläutert.

Dabei zeigen:
- Figur 1: schematisch eine mit dem erfindungemäßen Verfahren hergestellte Kopfstütze mit einer umlaufenden Kante in einer perspektivischen Ansicht,
- Figur 2: schematisch ein Profilelement,
- Figur 3: schematisch eine Schnittdarstellung einer Verbindungsnaht und des in einen Bezug eingenähten Profilelements und
- Figur 4: schematisch eine Schnittdarstellung eines Profilelements in einem ausgeschäumten Bezug.

Einander entsprechende Teile sind in allen Figuren mit den gleichen Bezugszeichen versehen.

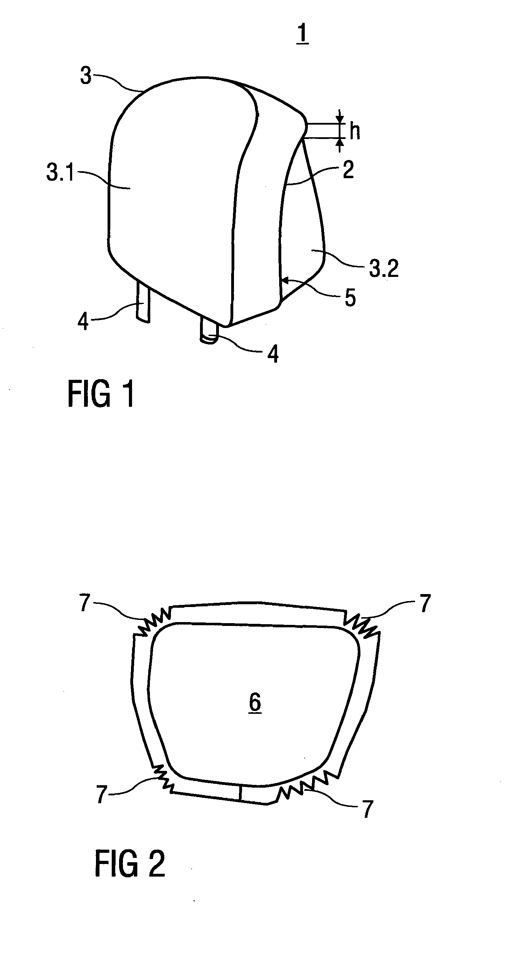

In der Figur 1 ist schematisch eine mit dem erfindungsgemäßen Verfahren hergestellte Kopfstütze 1 mit einer umlaufenden Kante 2 in einer perspektivischen Ansicht dargestellt.

Eine solche Kopfstütze 1 umfasst einen Bezug 3, welcher die Oberfläche der Kopfstütze 1 bildet. Der Bezug 3 ist aus zumindest einem vorderen Abschnitt 3.1 und einem hinteren Abschnitt 3.2 gebildet.

Der Bezug 3 besteht beispielsweise aus einem Stoff oder aus Leder.

An einer Unterseite der Kopfstütze 1 ist zumindest ein Halteelement 4 angeordnet, mittels dem die Kopfstütze 1 höhen- und/oder neigungsverstellbar an einem nicht dargestellten Fahrzeugsitz befestigt wird.

Im Verfahren zur Herstellung der Kopfstütze 1 wird der Bezug 3 aus dem vorderen Abschnitt 3.1 und dem hinteren Abschnitt 3.2 ballon- oder sackartig derart zusammengenäht, dass ein Hohlraum in einem Inneren des Bezugs 3 gebildet ist.

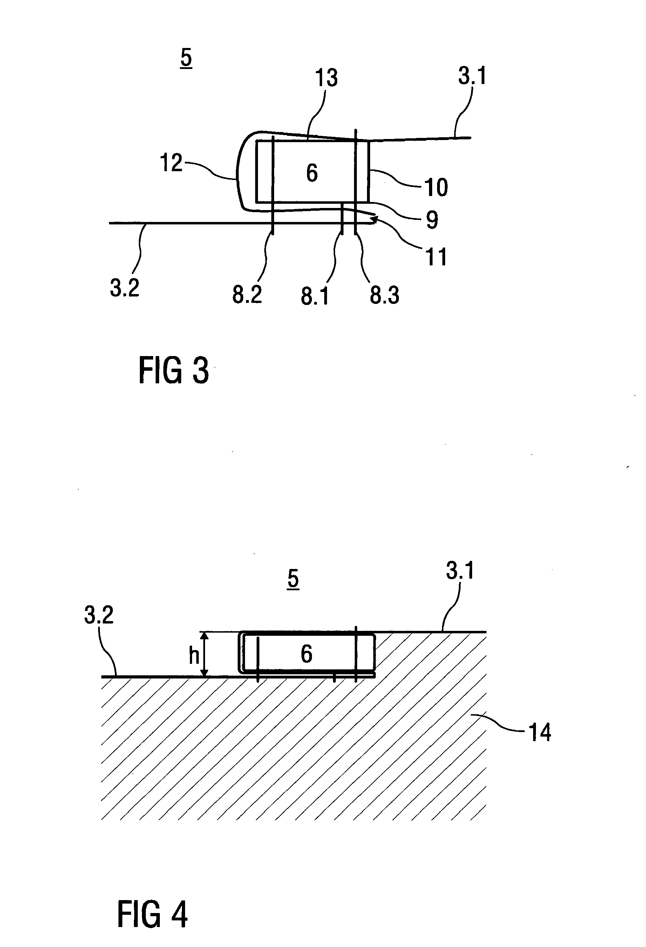

Anschließend wird der Bezug 3 in herkömmlicher Weise in eine nicht dargestellte Form eingelegt und mit einem flüssigen Kunststoff oder einem Kunststoffgemisch ausgeschäumt. Dieser Kunststoff oder das Kunststoffgemisch härten anschließend in der Form zu einem in Figur 4 dargestelltem Schaum 14 aus. Danach wird die Kopfstütze 1 aus der Form entnommen.

Mittels dieses Ausschäumens ist es herkömmlicherweise nicht möglich, auf oder an der Oberfläche der Kopfstütze 1 Kanten 2 zu erzeugen, wobei die Kanten 2 auch als Absatz oder Vorsprung ausgebildet sein können.

Um eine solche, von der umgebenden Oberfläche der Kopfstütze 1 scharf abgegrenzte Kante 2 mittels des herkömmlichen Ausschäumverfahrens zu erzeugen, wird in den Bezug 3 an oder in eine Verbindungsnaht 5 zwischen dem vorderen Abschnitt 3.1 und dem hinteren Abschnitt 3.2 ein Profilelement 6 eingebracht.

In der Form, in welche der Bezug 3 zum Ausschäumen eingelegt wird, ist eine mit der Verbindungsnaht 5 und dem Profilelement 6 korrespondierende Nut (nicht näher dargestellt) ausgeformt.

Ein solches Profilelement 6 ist in Figur 2 schematisch dargestellt. Das Profilelement 6 ist vorzugsweise aus Kunststoff gebildet und zumindest bereichsweise flexibel.

Um diese bereichsweise Flexibilität zu erzeugen oder zu unterstützen, ist das Profilelement 6 an den Außenseiten seiner Biegungen mit einer Vielzahl von nebeneinander angeordneten Einschnitten 7 versehen.

Das Profilelement 6 weist einen rechteckigen Querschnitt auf.

Die Kante 2 weist vorzugsweise eine mit einer Stärke des Profilelements 6 korrespondierende Höhe h im Bereich von 5 bis 8 mm auf.

In Figur 3 ist schematisch eine Schnittdarstellung der Verbindungsnaht 5 und des in den Bezug 3 eingenähten Profilelements 6 dargestellt.

Die Verbindungsnaht 5 ist vorzugsweise aus drei einzelnen Nähten 8.1 bis 8.3 gebildet.

In einem ersten Verfahrensschritt werden der vordere Abschnitt 3.1 und der hintere Abschnitt 3.2 mit ihren Außenseiten aufeinander gelegt und mittels einer ersten Naht 8.1 miteinander vernäht.

In einem zweiten Verfahrensschritt wird das Profilelement 6 mit seiner Unterseite 9 derart auf die erste Naht 8.1 aufgelegt, dass eine Hinterseite 10 des Profilelements 6 bündig oder nahezu bündig mit dem Endbereich 11 der beiden miteinander vernähten Abschnitte 3.1 und 3.2 abschließt.

Anschließend wird das Profilelement 6 mittels einer zweiten Naht 8.2 mit den miteinander vernähten Abschnitten 3.1 und 3.2 vernäht, wobei diese zweite Naht 8.2 im Bereich einer Vorderseite 12 des Profilelements 6 verläuft.

In einem dritten Verfahrensschritt wird das freie Ende des vorderen Abschnitts 3.1 um die Vorderseite 12 und eine Oberseite 13 des Profilelements 6 geführt und mit einer dritten Naht 8.3 vernäht. Diese dritte Naht 8.3 verläuft durch den Endbereich 11, das Profilelement 6 und den vorderen Abschnitt 3.1 des Bezugs 3. Die dritte Naht 8.3 ist im Bereich der Hinterseite 10 des Profilelements 6 angeordnet.

In einem vierten Verfahrensschritt wird der Bezug 3 in die Form eingebracht und mit einem flüssigen Kunststoff oder einem Kunststoffgemisch ausgeschäumt, wobei in der Form eine mit der Verbindungsnaht 5 und dem Profilelement 6 des Bezugs 3 korrespondierende Nut ausgeformt ist.

Durch die drei Nähte 8.1 bis 8.3 ist der Bezug 3 im Bereich der Verbindungsnaht 5 derart abgedichtet, dass beim Einfüllen des flüssigen Kunststoffs ins Innere des Bezugs 3 kein Kunststoff durch die Nähte 8.1 bis 8.3 hindurch an die Außenseite des Bezugs 3 fließt.

In einem fünften Verfahrensschritt wird vom verfestigten Kunststoff oder dem verfestigten Kunststoffgemisch im Inneren des Bezugs 3 ein Schaum 14 ausbildet, welcher das Innere des Bezugs 3 vollständig oder nahezu vollständig ausfüllt.

In Figur 4 ist schematisch eine Schnittdarstellung des Profilelements 6 in einem ausgeschäumten Bezug 3 dargestellt.

### Bezugszeichenliste

- 1: Kopfstütze
- 2: Kante
- 3: Bezug
- 3.1: vorderer Abschnitt
- 3.2: hinterer Abschnitt
- 4: Haltelement
- 5: Verbindungsnaht
- 6: Profilelement
- 7: Einschnitt
- 8.1: erste Naht
- 8.2: zweite Naht
- 8.3: dritte Naht
- 9: Unterseite
- 10: Hinterseite
- 11: Endbereich
- 12: Vorderseite
- 13: Oberseite
- 14: Schaum
- h: Höhe

## Patentansprüche

1. Kopfstütze (1) für einen Fahrzeugsitz mit einem Kopfstützenkörper und zumindest einem Halteelement (4), wobei an der Außenseite des Kopfstützenkörpers zumindest abschnittsweise ein Bezug (3) vorgesehen ist, welcher eine Oberfläche der Kopfstütze (1) bildet, wobei der Bezug (3) aus zumindest einem vorderen Abschnitt (3.1) und einem hinteren Abschnitt (3.2) gebildet ist, welche ballon- oder sackartig mittels zumindest einer Verbindungsnaht (5) miteinander koppelbar sind, **dadurch gekennzeichnet, dass** ein Profilelement (6) zumindest abschnittsweise kraft- und/oder formschlüssig unter Ausbildung eines Absatzes, Vorsprungs und/oder einer Kante (2) an der Oberfläche der Kopfstütze (1) in die zumindest eine Verbindungsnaht (5) eingebracht ist und zumindest abschnittsweise flexibel ausgebildet ist.

2. Kopfstütze (1) nach Anspruch 1,
**dadurch gekennzeichnet, dass** das Profilelement (6) einen rechteckigen Querschnitt aufweist.

3. Kopfstütze (1) nach Anspruch 1 oder 2,
**dadurch gekennzeichnet, dass** das Profilelement (6) aus einem Kunststoff oder einem Kunststoffgemisch gefertigt ist.

4. Kopfstütze (1) nach einem der vorherigen Ansprüche,
**dadurch gekennzeichnet, dass** das Profilelement (6) die Kopfstütze (1) vollständig oder nahezu vollständig umlaufend ausgebildet ist.

5. Verfahren zur Herstellung einer Kopfstütze (1) gemäß einem der vorhergehenden Ansprüche,
**dadurch gekennzeichnet, dass** in einem ersten Verfahrensschritt der vordere Abschnitt (3.1) und der hintere Abschnitt (3.2) des Bezugs (3) mit ihren Außenseiten aufeinander gelegt und mittels einer ersten Naht (8.1) miteinander vernäht werden.

6. Verfahren nach Anspruch 5,
**dadurch gekennzeichnet, dass** in einem zweiten Verfahrensschritt das Profilelement (6) mit seiner Unterseite (9) derart auf die erste Naht (8.1) aufgelegt wird, dass eine Hinterseite (10) des Profilelements (6) bündig oder nahezu bündig mit einem Endbereich (11) der beiden miteinander vernähten Abschnitte (3.1, 3.2) des Bezugs (3) abschließt, wobei das Profilelement (6) mittels einer zweiten Naht (8.2) mit den miteinander vernähten Abschnitten (3.1, 3.2) vernäht wird, wobei diese zweite Naht (8.2) im Bereich einer Vorderseite (12) des Profilelements (6) verläuft.

7. Verfahren nach Anspruch 6,
**dadurch gekennzeichnet, dass** in einem dritten Verfahrensschritt ein freies Ende des vorderen Abschnitts (3.1) um die Vorderseite (12) und eine Oberseite (13) des Profilelements (6) geführt und mit einer dritten Naht (8.3) vernäht wird, wobei diese dritte Naht (8.3) durch den Endbereich (11), das Profilelement (6) und den vorderen Abschnitt (3.1) des Bezugs (3) verläuft und die dritte Naht (8.3) im Bereich einer Hinterseite (10) des Profilelements (6) angeordnet ist.

8. Verfahren nach Anspruch 7,
**dadurch gekennzeichnet, dass** in einem vierten Verfahrensschritt der Bezug (3) in eine Form eingebracht und mit einem flüssigen Kunststoff oder einem Kunststoffgemisch ausgeschäumt wird, wobei in der Form eine mit der Verbindungsnaht (5) und dem Profilelement (6) des Bezugs (3) korrespondierende Nut ausgeformt ist.

9. Verfahren nach Anspruch 8,
**dadurch gekennzeichnet, dass** in einem fünften Verfahrensschritt vom verfestigten Kunststoff oder dem verfestigten Kunststoffgemisch im Inneren des Bezugs (3) ein Schaum (14) ausbildet wird, welcher das Innere des Bezugs (3) vollständig oder nahezu vollständig ausfüllt.

## Claims

1. A head restraint (1) for a vehicle seat having a head restraint body and at least one retaining element (4), wherein a cover (3) is provided at least partially on the outer face of the head restraint body, said cover forming a surface of the head restraint (1), wherein the cover (3) is formed from at least one front portion (3.1) and one rear portion (3.2), which may be coupled together in the manner of a balloon or bag by means of at least one connecting seam (5), **characterized in that** a profile element (6) is incorporated non-positively and/or positively at least partially into the at least one connecting seam (5), forming a shoulder, projection and/or an edge (2) on the surface of the head restraint (1) and that the profile element (6) is configured to be at least partially flexible.

2. The head restraint (1) as claimed in claim 1, **characterized in that** the profile element (6) has a rectangular cross section.

3. The head restraint (1) as claimed in claim 1 or 2, **characterized in that** the profile element (6) is produced from a plastics material or a plastics mixture.

4. The head restraint (1) as claimed in one of the preceding claims, **characterized in that** the profile element (6) is formed entirely or almost entirely circumferential around the head restraint (1).

5. A method for producing a head restraint (1) as claimed in one of the preceding claims, **characterized in that** in a first method step, the front portion (3.1) and the rear portion (3.2) of the cover (3) are placed on top of one another with their outer faces and stitched together by means of a first seam (8.1).

6. The method as claimed in claim 5, **characterized in that** in a second method step, the profile element (6) is placed with its lower face (9) on the first seam (8.1), such that a rear face (10) of the profile element (6) terminates flush or almost flush with an end region (11) of the two portions (3.1, 3.2) of the cover (3) stitched together, wherein the profile element (6) is stitched by means of a second seam (8.2) to the portions (3.1, 3.2) stitched together, wherein said second seam (8.2) extends in the region of a front face (12) of the profile element (6).

7. The method as claimed in claim 6, **characterized in that** in a third method step, a free end of the front portion (3.1) is guided around the front face (12) and an upper face (13) of the profile element (6) and is stitched by a third seam (8.3), wherein said third seam (8.3) extends through the end region (11), the profile element (6) and the front portion (3.1) of the cover (3) and the third seam (8.3) is arranged in the region of a rear face (10) of the profile element (6).

8. The method as claimed in claim 7, **characterized in that** in a fourth method step, the cover (3) is introduced into a mold and foamed with a liquid plastics material or a plastics mixture, wherein a groove corresponding to the connecting seam (5) and the profile element (6) of the cover (3) is formed in the mold.

9. The method as claimed in claim 8, **characterized in that** in a fifth method step, a foam (14) is formed by the solidified plastics material or the solidified plastics mixture in the interior of the cover (3), said foam entirely or almost entirely filling the interior of the cover (3).

## Revendications

1. Appui-tête (1) pour un siège de véhicule comprenant un corps d'appui-tête et au moins un élément de retenue (4), un revêtement (3) étant prévu au moins en partie au niveau du côté extérieur du corps d'appui-tête, lequel forme une surface de l'appui-tête (1), le revêtement (3) étant formé d'au moins une portion avant (3.1) et d'une portion arrière (3.2), qui peuvent être accouplées l'une à l'autre à la manière d'un ballon ou d'un sac au moyen d'au moins une couture de liaison (5), **caractérisé en ce qu'**un élément profilé (6) est introduit au moins en partie par engagement par correspondance de formes et/ou par force en créant un épaulement, une saillie et/ou une arête (2) sur la surface de l'appui-tête (1) dans l'au moins une couture de liaison (5) et est réalisé de manière au moins partiellement flexible.

2. Appui-tête (1) selon la revendication 1, **caractérisé en ce que** l'élément profilé (6) présente une section transversale rectangulaire.

3. Appui-tête (1) selon la revendication 1 ou 2, **caractérisé en ce que** l'élément profilé (6) est fabriqué en plastique ou en un mélange de plastiques.

4. Appui-tête (1) selon l'une quelconque des revendications précédentes,
**caractérisé en ce que** l'élément profilé (6) est réalisé de manière à entourer l'appui-tête (1) complètement ou presque complètement.

5. Procédé de fabrication d'un appui-tête (1) selon l'une quelconque des revendications précédentes, **caractérisé en ce que** dans une première étape de procédé, la portion avant (3.1) et la portion arrière (3.2) du revêtement (3) sont posées avec leurs côtés extérieurs l'un sur l'autre et sont cousues l'une à l'autre au moyen d'une première couture (8.1).

6. Procédé selon la revendication 5,
**caractérisé en ce que** dans une deuxième étape de procédé, l'élément profilé (6), avec son côté inférieur (9), est placé sur la première couture (8.1) de telle sorte qu'un côté arrière (10) de l'élément profilé (6) se termine en affleurement ou presque en affleurement avec une région d'extrémité (11) des deux portions cousues l'une à l'autre (3.1, 3.2) du revêtement (3), l'élément profilé (6) étant cousu au moyen d'une deuxième couture (8.2) aux portions cousues l'une à l'autre (3.1, 3.2), cette deuxième couture (8.2) s'étendant dans la région d'un côté avant (12) de l'élément profilé (6).

7. Procédé selon la revendication 6,
**caractérisé en ce que** dans une troisième étape de procédé, une extrémité libre de la portion avant (3.1) est guidée autour du côté avant (12) et d'un côté supérieur (13) de l'élément profilé (6) et est cousue avec une troisième couture (8.3), cette troisième couture (8.3) s'étendant à travers la région d'extrémité (11), l'élément profilé (6) et la portion avant (3.1) du revêtement (3) et la troisième couture (8.3) étant disposée dans la région d'un côté arrière (10) de l'élément profilé (6).

8. Procédé selon la revendication 7,
**caractérisé en ce que** dans une quatrième étape de procédé, le revêtement (3) est introduit dans un moule et est moussé avec un plastique liquide ou un mélange de plastiques, une rainure correspondant à la couture de liaison (5) et à l'élément profilé (6) du revêtement (3) étant formée dans le moule.

9. Procédé selon la revendication 8,
**caractérisé en ce que** dans une cinquième étape de procédé, une mousse (14) est formée à partir du plastique solidifié ou à partir du mélange de plastiques solidifié à l'intérieur du revêtement (3), laquelle mousse remplit l'intérieur du revêtement (3) complètement ou presque complètement.
